# EUROPÄISCHE PATENTSCHRIFT

(11) **EP 2 342 036 B1**
(45) Veröffentlichungstag und Bekanntmachung des Hinweises auf die Patenterteilung: **27.03.2013**
(21) Anmeldenummer: 09771273.1
(22) Anmeldetag: 17.10.2009
(51) Int. Cl.: B23D 43/02, B23F 21/26

(54) **INNENRÄUMWERKZEUG**
INTERNAL BROACHING TOOL
OUTIL DE BROCHAGE INTÉRIEUR

(30) Priorität: 24.10.2008 DE 102008053156
(43) Veröffentlichungstag der Anmeldung: 13.07.2011
(73) Patentinhaber: Spezialwerkzeuge GmbH Zella-Mehlis, 98544 Zella-Mehlis / Thüringen (DE)
(72) Erfinder: KÜHNER, Jürgen, 98544 Zella-Mehlis (DE); HETTMANN, Ernst, 75248 Ölbronn-Dürrn (DE)
(86) Internationale Anmeldenummer: PCT/DE2009/001455
(87) Internationale Veröffentlichungsnummer: WO 2010/045927

(56) Entgegenhaltungen:
- EP-A1- 1 184 118
- EP-A1- 1 317 982
- US-A- 2 161 901
- US-A- 2 986 801
- US-A- 3 178 800

## Beschreibung

Die Erfindung betrifft ein Innenräumwerkzeug zum Innenräumen von Innenverzahnungen gemäß dem Oberbegriff des Patentanspruches 1 sowie dem Oberbegriff des Patentanspruches 2.

Aus der DIN 1415 (Ausgabe 1973), Blatt 1, Seite 2 sind Innenräumwerkzeuge zum Innenräumen von Profilen bekannt.

Diese Innenräumwerkzeuge weisen einen Schaft, einen Zahnungsteil und ein Endstück auf. Zum Innenräumen wird der Schaft des Innenräumwerkzeuges im Schafthalter einer Räummaschine eingespannt. Die zu erzeugenden Profile werden geräumt indem das wie beschrieben eingespannte Räumwerkzeug durch ein ebenfalls in der Räummaschine angeordnetes Werkstück hindurchgezogen wird.

Nach Beendigung des Räumvorganges und Entnahme des geräumten Werkstückes wird das Endstück des Räumwerkzeuges von einem Endstückhalter der Räummaschine erfasst und wieder in seine Ausgangsposition zurück transportiert.

Der Zahnungsteil des Räumwerkzeuges weist entgegen der Räumrichtung hintereinander in mehreren Reihen angeordnete Räumzähne auf.

Diese Räumzähne sind zum Schneiden des Profilgrundes einerseits mit Profilgrundschneiden und zum Schneiden der Profilflanken andererseits zudem mit Profilflankenschneiden ausgestattet.

Die Profilgrundschneiden werden, da sie die Hauptschneidleistung erbringen auch als Hauptschneiden und die Profilflankenschneiden als Nebenschneiden bezeichnet.

Die Profilgrundschneiden der einander zugeordneten Räumzähne sind hintereinander angeordnet und weisen entgegen der Räumrichtung eine Tiefenstaffelung, d.h. eine Durchmessersteigerung auf.

Dies bewirkt, dass alle zum Schneiden eines Profils dienenden Räumzähne nacheinander jeweils einen Span am Profilgrund schneiden.

Die zum Schneiden der Flanken des Profils dienenden Profilflankenschneiden weisen entgegen der Räumrichtung ein Profilgefälle auf, wobei die Profilflankenschneiden des nachfolgenden Räumzahns bezogen auf die Profilflankenschneiden des voreilenden Räumzahnes seitlich frei liegen, d.h. "schmaler" ausgebildet sind, so dass der nachfolgende Räumzahn mit seinen Profilflankenschneiden stets nur in dem durch die Tiefenstaffelung (Durchmessersteigerung) vorgesehenen Bereich schneidet. Dadurch kann ein Verklemmen der Räumzähne im Bereich der Profilflanken während des Räumvorganges verhindert werden.

Infolge der hohen Belastungen des Räumwerkzeuges kann es während des Räumvorganges zu einer Verlagerung der Achse des Werkzeuges kommen, wodurch die nacheinander abtragenden Räumzähne gegenüber dem zu räumenden Werkstück eine unterschiedliche Mittenlage aufweisen.

Dieser Mittenabweichung kann nun beim Drallräumen, infolge der beim Drallräumen auftretenden zusätzlichen hohen rotatorischen Kräfte ein Torsionsfehler überlagert werden, wodurch sowohl die Profilgenauigkeit wie auch die Oberflächengüte der Profilflanken beeinträchtigt wird.

Da jedoch bei innenverzahnten Zahnrädern mit einer Schrägverzahnung zur Gewährleistung eines verschleißfreien, exakten und ruhigen Laufes eine hohe Profilform und Flankengenauigkeit gefordert wird, ist es im Stand der Technik üblich dem bereits beschriebenen, mit Räumzähnen ausgestatteten Zahnungsteil entgegen der Räumrichtung noch einen Kalibrierbereich nachzuordnen.

Dieser Kalibrierbereich am Räumwerkzeug besteht aus mehreren hintereinander angeordneten Räumzähnen gleicher Höhe, welche entgegen der Räumrichtung größer werdende Zahndicken aufweisen.

Diese Kalibrierräumzähne schneiden jeweils über die gesamte Höhe der Profilflanke einen Span, dessen Spandicke im allgemeinen 10 bis 20 µm pro Zahn beträgt. Diese Kalibrierräumzähne sind an ihren Profilflankenschneiden mit einem Freiwinkel versehen.

Mittels des Kalibrierräumens wird eine gute Profilformgenauigkeit und eine hohe Oberflächengüte erreicht.

Mittels der im Stand der Technik eingesetzten Innenräumwerkzeuge mit Kalibrierteil tritt beim Wechsel von tiefengestaffelten Räumen zum Vollformkalibrieren systembedingt eine Räumkraftunterbrechung auf, die insbesondere beim Drallräumen zu einer Entlastung der entgegen der Räumrichtung wirkenden Hauptschnittkraft und damit zu einer Reduktion der Torsionsspannung führt, wodurch sich die relative Verdrehung zwischen dem Werkstück und dem Räumwerkzeug verändert. Diese Rückfederung kann nun bewirken, dass der Vollform-Kalibrierbereich nicht richtig in die unter Tiefenstaffelung bereits geräumten Profile eingeführt wird, so dass bei fehlerhafter "Einführung" der Kalibrierzähne, welche an beiden Zahnflanken scharfe Schneiden besitzen, dann die Profilflanken einseitig angeschnitten werden, so dass das Profil dann nicht wie eigentlich beabsichtigt an beiden Profilflanken kalibriert wird.

Diese teilweise "Rückfederung" muss nun bereits bei der Konstruktion des Räumwerkzeuges, d.h. der Anordnung der Räumzähne des Kalibrierbereiches Berücksichtigung finden.

Eine fehlerhaft "versetzte" Anordnung der Kalibrierräumzähne gegenüber den tiefengestaffelten Räumzähnen hat zur Folge, dass das gesamte Räumwerkzeug unbrauchbar ist.

Daher wurde mittels einer in der EP 0739674 A1 vorbeschriebenen Lösung versucht die vorgenannten Nachteile bei Innenräumwerkzeugen dadurch zu beseitigen, dass die hintereinander angeordnete und einander zugeordneten Räumzähne über ihre volle Profilhöhe Profilflankenschneiden besitzen die eine Profilsteigung aufweisen, welche klein gegenüber der Durchmessersteigung der Profiigrundschneiden ist, so dass bei dieser Lösung die Räumzähne "dicker" werden.

Bei dieser Lösung wird versucht die Schnittkraft derart zu beeinflussen, dass während des gesamten Räumvorganges eine konstante Torsionskraft beibehalten wird. Erst nach Beendigung des gesamten Räumvorganges erfolgt dann eine Entspannung und eine "Rückfederung" der Torsionsverdrehung und kann zu Profilfehlern führen.

Um mittels dieser Lösung das gewünschte Räumergebnis zu erzielen sind umfangreiche Versuche erforderlich. Dennoch wird jede Variation der Werkstückmaterial-Festigkeitskennwerte das Räumergebnis beeinflussen und kann dann auch zu unerwünschten Profilfehlern führen.

Nachteilig bei dieser Lösung ist einerseits die aufwendige und sehr schwierige Herstellung, da die Profilsteigungen von 1 bis 3 µm pro Zahn nur in Summe in der Maschine (beispielsweise über 20 Zähne) gemessen werden können. Andererseits hat man bei dieser in der EP 0739674 A1 vorgestellten Lösung auch keine Möglichkeit, das einmal gefertigte Räumwerkzeug zu "korrigieren", d.h. z.B. dann wenn die seitens des Kunden geforderten Parameter der Verzahnung mittels des eingesetzten Räumwerkzeuges nicht erfüllt werden können derart zu verändern, dass mit möglichst geringem Kostenaufwand dem Kundenwunsch entsprochen werden kann, so dass auch bei dieser Lösung dann stets ein neues Innenräumwerkzeug zeitaufwendig und kostenintensiv angefertigt werden muss.

Diese in der EP 0739674 A1 vorbeschriebene Lösung wurde mittels der in der EP 1 160 040 A1 offenbarten Lösung optimiert, wobei auch die neue, optimierte Lösung wiederum die bereits in Verbindung mit der EP 0739674 A1 erläuterten Nachteile aufweist.

Aus der EP 1 184 118 B1 ist weiterhin ein Räumwerkzeug mit einer Vielzahl von Schneidenabschnitten mit in Achsrichtung jeweils mindestens drei und maximal sechs Zähnen bekannt, welche eine axiale Verlagerung, d.h. ein "Verlaufen" des Räumwerkzeuges bei der Herstellung von geraden Profilen vermeiden sollen. Hierzu sind die einzelnen Schneidenabschnitte voneinander durch Rückzentrierführungen getrennt, welche zylinderförmig ausgeführt sind und einen Durchmesser haben der gleich dem Durchmesser der Eintrittsführung ist, wobei diese Rückzentrierführungen einerseits der Führung dienen und zudem gleichzeitig als Entspannungsteil zwischen den einzelnen Schneidsequenzen des Innenräumwerkzeuges wirken.

Die Herstellung derartiger Rückzentrierführungen ist sehr aufwendig und kostenintensiv und hat dennoch den Nachteil, dass eine Räumkraftunterbrechung im Zusammenhang mit einem konstanten Profilgefälle zu einem unzulässigen Profilfehler führt, so dass die vg. Lösung beim Drallräumen nicht anwendbar ist.

Ein segmentiertes Innenräumwerkzeug mit mehreren zwischen einzelnen Schneidsequenzen angeordneten Führungs- und Entspannungsbereichen war bereits aus der US 1,197,132 bekannt.

Diese in der US 1,197,132 vorbeschriebene Anordnung von mehreren Führungs- und Entspannungsbereichen zwischen einzelnen Schneidsequenzen eines segmentierten Innenräumwerkzeuges ist wesentlich einfacher herstellbar, hat jedoch ebenfalls den bereits zuvor erläuterten Nachteil, dass beim Einsatz dieser Lösung eine Räumkraftunterbrechung auftritt, welche im Zusammenhang mit einem konstanten Profilgefälle zu einem unzulässigen Profilfehler führt, so dass auch diese Lösung beim Drallräumen nicht anwendbar ist.

In der EP 1 317 982 B1 wird darüber hinaus eine weitere Lösung offenbart, die die bereits in der EP 0739674 A1 vorbeschriebene Lösung weiterentwickelt und die sowohl auf Zieh-Räummaschinen als auch auf immer mehr zur Anwendung kommenden Hebetisch-Räummaschinen eingesetzt werden kann.

Bei diesem Innenräumwerkzeug wird mittels des Schruppteiles am gesamten Werkstück eine der beiden Profilflanken so weit fertig bearbeitet, dass diese vom Kalibrierbereich nicht mehr nachbearbeitet werden muss.

Diese nun bereits die endgültige Form aufweisende Flanke fungiert während des Kalibrierens als Führungsflanke.

Daher sind bei dieser Lösung die Schneiden im Kalibrierbereich nur einseitig an den Kalibrierzähnen angeordnet.

Alle Kalibrierzähne weisen in der selben Richtung eine Druckflanke ohne Freiwinkel auf.

Diese Druckflanken legen sich während des Kalibrierens an die bereits (endgültig) gefertigten Führungsflanken des Werkstückes an.

Die den Führungsflanken gegenüber liegenden Flanken der Kalibrierzähne sind mit einem Freiwinkel versehene Schneiden.

Diese Schneiden bewirken ein Nachkalibrieren der vorgefertigten den Führungsflanken gegenüberliegenden Profilflanken.

Hieraus resultiert jedoch neben den analog zur Lösung nach der EP 0739674 A1 auftretenden Nachteilen ein weiterer Nachteil, der darin besteht, dass während des Räumvorganges, mittels der in der EP 1 317 982 B1 vorgestellten Lösung, infolge der einseitigen Schlichtbearbeitung keine Flankenformkorrekturen (z.B. Korrekturen der Höhenballigkeit zur Verbesserung der Laufeigenschaften der Verzahnung) mehr vorgenommen werden können, da Flankenformkorrekturen stets beidseitig erfolgen müssen.

Aus der JP 61214914 A ist zudem ein Räumwerkzeug bekannt, bei dem Räumzähne mit ausschließlich an den Außenradien angeordneten Schneiden der Profilgrundschneiden (zum Vorräumen / Schruppräumen) stirnseitig nach der jeweiligen Schneiden derart abgesetzt sind, dass dadurch in jeden Räumschneidzahn ein Führungsbereich integriert wird, wobei der "hintere" Teil jedes Räumschneidzahnes diesen zusätzlichen Führungsbereich bildet.

Bei dieser in der JP 61214914 A offenbarten Anordnung handelt sich ausschließlich um Räumzähne mit Profilgrundschneiden (diese Schneiden sind, wie bereits erwähnt, stets (am Zahnkopf) an den Außenradien angeordnet). Diese am Außenradius angeordneten Scheiden werden (gemäß der JP 61214914 A) hinterschliffen (abgesetzt) und ergeben so "einen zusammenhängenden Zahn" mit einem vorderen Schneidenteil und einem hinteren Führungsbereich.

Bei dieser Lösung führen (im hinteren Führungsbereich) zwangsläufig nur die oberen Flanken, so dass bestenfalls das "Verlaufen" des Räumwerkzeuges beim Vorräumen reduziert werden kann.

Dokument US 3178800 beschreibt ein Innenräumwerkzeug gemäß den Oberbegriffen der Ansprüche 1 und 2.

Der Erfindung liegt daher die Aufgabe zugrunde ein Innenräumwerkzeug zum Räumen von Profilen zu entwickeln, welches die vorgenannten Nachteile des Standes der Technik beseitigt und ein kostengünstiges, robustes, maschinentechnisch einfaches, funktionssicheres und zuverlässiges Räumen ohne Vorhaltemaß mit hoher Profilform und Flankengenauigkeit am geräumten Werkstück selbst bei Werkstofffestigkeitsänderungen des Werkstückes ermöglicht, so dass das tatsächlich geräumte Profil exakt dem Soll-Profil entspricht.

Erfindungsgemäß wird diese Aufgabe durch ein Innenräumwerkzeug nach den Merkmalen der Hauptansprüche der Erfindung gelöst.

Vorteilhafte Ausführungen, Einzelheiten und Merkmale der Erfindung ergeben sich aus den Unteransprüchen sowie der nachfolgenden Beschreibung von mehreren erfindungsgemäßen Ausführungsbeispielen in Verbindung mit zehn Zeichnungen zur erfindungsgemäßen Lösung.

Es zeigen dabei:
- Figur 1 :: das Innenräumwerkzeug mit Kalibrierteil 6 in einer der möglichen erfindungsgemäßen Ausführungsformen;
- Figur 2 :: die Einzelheit "Z" des Kalibrierteiles 6 aus Figur 1 mit einer erfindungsgemäßen Ausführungsform der Kalibrierräumzähne 8 in einer räumlichen Darstellung;
- Figur 3 :: Teilschnitt bei C-C gemäß den Figuren 4 und 5 durch das Werkstück 29 während des Kalibrierräumens mit einem erfindungsgemäß nach Figur 2 ausgebildeten Kalibrierteil 6;
- Figur 4 :: Schnitt bei B - B gemäß Figur 3 durch das Werkstück 29 während des Kalibrierräumens mit einem erfindungsgemäß analog Figur 2 ausgebildeten Kalibrierteil 6 in der Seitenansicht;
- Figur 5 :: Schnitt bei A - A gemäß Figur 3 durch das Werkstück 29 während des Kalibrierräumens mit einem erfindungsgemäß analog Figur 2 ausgebildeten Kalibrierteil 6 in der Seitenansicht;
- Figur 6 :: die Einzelheit "Z" des Kalibrierteiles 6 aus Figur 1 mit einer weiteren erfindungsgemäßen Ausführungsform der Kalibrierräumzähne 8 in einer räumlichen Darstellung;
- Figur 7 :: Teilschnitt bei F-F gemäß den Figuren 8 und 9 durch das Werkstück 29 während des Kalibrierräumens mit einem erfindungsgemäß nach Figur 6 ausgebildeten Kalibrierteil 6;
- Figur 8 :: Schnitt bei D - D gemäß Figur 7 durch das Werkstück 29 während des Kalibrierräumens mit einem erfindungsgemäß analog Figur 6 ausgebildeten Kalibrierteil 6 in der Seitenansicht;
- Figur 9 :: Schnitt bei E - E gemäß Figur 7 durch das Werkstück 29 während des Kalibrierräumens mit einem erfindungsgemäß nach Figur 6 ausgebildeten Kalibrieteil 6 in der Seitenansicht;
- Figur 10 :: das erfindungsgemäße Innenräumwerkzeug mit einer speziellen, vorteilhaften Ausführungsformen des Kalibrierteiles 6 in Form einer gegenüber dem Zahnungsteil 4 "justierbaren" Kalibrierbuchse 20.

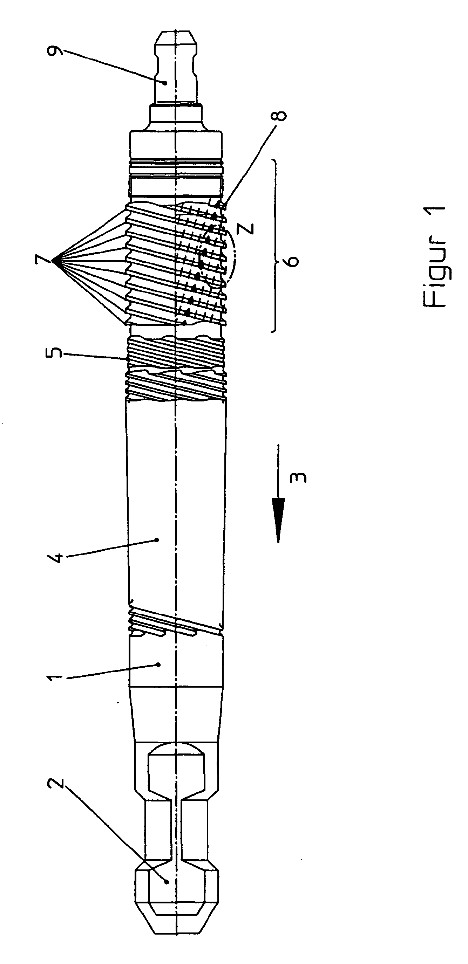

Das erfindungsgemäße Innenräumwerkzeug 1 zum Innenräumen von Innenverzahnungen mit Profilgrund und Profilflanken, bestehend aus einem Schaft 2, einem dem Schaft 2 entgegen der Räumrichtung 3 benachbart angeordneten Zahnungsteil 4 mit mehreren in Reihen hintereinander angeordneten Räumzähnen mit einander zugeordneten Profilgrundschneiden zum Vorräumen (Schruppräumen) eines Profils, einem entgegen der Räumrichtung 3 nachfolgend angeordneten Kalibrierteil 6 mit mehreren in Reihen 7 hintereinander angeordneten Kalibrierräumzähnen 8 und einem Endstück 9, ist in der Figur 1 dargestellt, wobei erfindungsgemäß zwischen dem Zahnungsteil 4 und dem Kalibrierteil 6 ein Entspannungsteil 5 angeordnet ist.

Diese erfindungsgemäße Anordnung des Entspannungsteiles 5 bewirkt ein Entspannen des Werkstückes vor der Kalibrierbearbeitung, so dass nicht erst nach Beendigung des Räumvorganges die aus den beim Räumen auftretenden Schnittkräften resultierenden Verformungen des Werkstückes aufgehoben werden, wodurch mittels der erfindungsgemäßen Lösung ohne die Berücksichtung von Werkstofftoleranzen die Endmaße wesentlich einfacher und zuverlässiger gefertigt werden können.

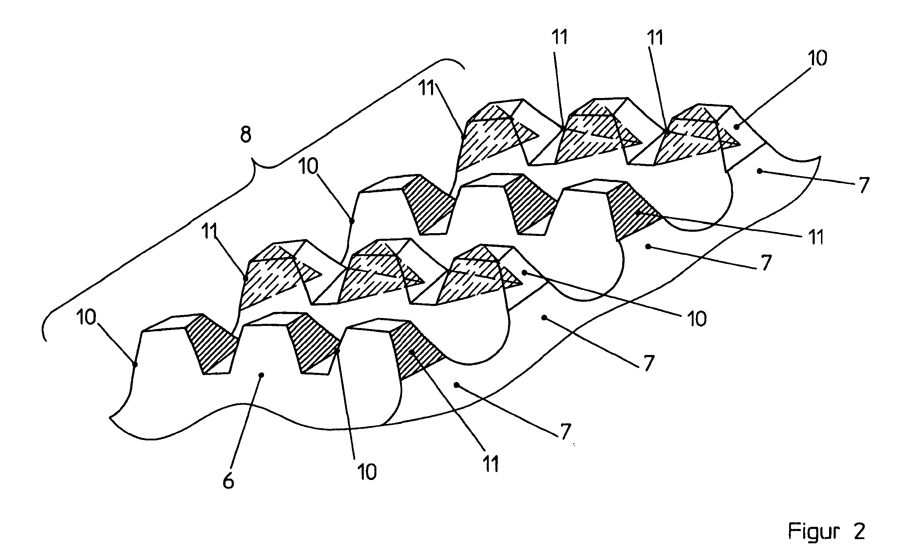

Die Figur 2 zeigt die Einzelheit "Z" des Kalibrierteiles 6 aus Figur 1 mit einer der erfindungsgemäßen Ausführungsformen der Kalibrierräumzähne 8 in räumlicher Darstellung.

Diese in der Figur 2 dargestellte Ausführungsform der erfindungsgemäßen Lösung zeichnet sich erfindungsgemäß dadurch aus, dass die Kalibrierräumzähne 8 in den benachbarten Reihen 7 am Kalibrierteil 6 derart ausgebildet sind, dass diese jeweils mit einer Führungsflanke 10 (ohne Freiwinkel / bzw. einem negativem Freiwinkel kleiner/gleich 0,1°) und einer Schneidflanke 11 (mit positivem Freiwinkel) versehen sind und in den benachbarten Reihen 7 die jeweilige Anordnung der Führungsflanken 10 und der Schneidflanken 11 an den entgegen der Räumrichtung hintereinander angeordneten Kalibrierräumzähnen 8 abwechselnd zueinander versetzt ist, wobei jede entgegen der Räumrichtung 3 nachgelagerte Führungsflanke 10 jeweils der in der "vorauseilenden" Reihe 7 zugeordneten Schneidflanke 11 (bzw. der Flanke des Räumzahnes) in ihrer Lage, ihrer Form und ihrer Größe zugeordnet ist.

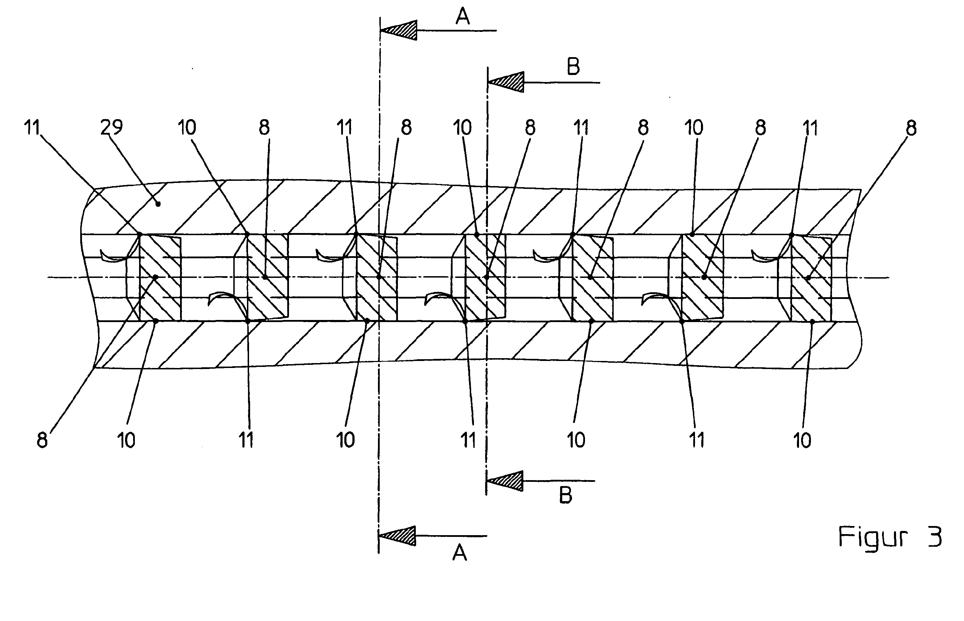

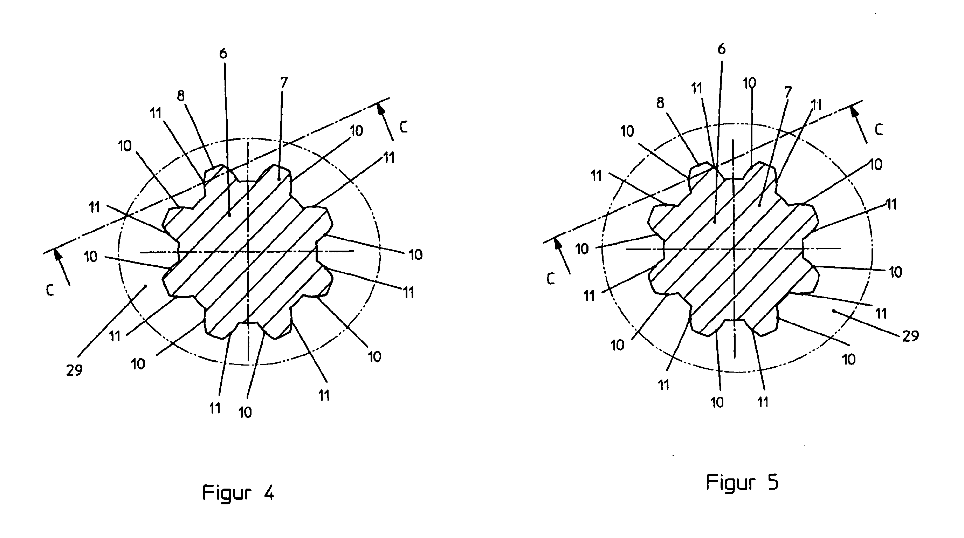

Diese erfindungsgemäße Anordnung der in Figur 2 räumlich dargestellten erfindungsgemäßen Kalibrierräumzähne 8 am Kalibrierteil 6 bewirkt, wie in der Figur 3 einem Teilschnitt bei C-C gemäß der Figuren 4 und 5 durch das Werkstück 29 während des Kalibrierräumens dargestellt, eine abwechselnde Bearbeitung der Flanken des Werkstückes 29 bei stets exakter Führung der Schneidflanken 11 während des Räumens durch die Führungsflanke 10 auch beim Drallräumen. Die erfindungsgemäße Anordnung bewirkt, dass keine Verwindung und keine Verlagerung der Räumwerkzeugmittenachse eintreten kann, wodurch das erfindungsgemäße Innenräumwerkzeug sehr gut zum Räumen von Profilen und auch optimal zum Drallräumen selbst bei dünnwandigen (instabilen) Werkstücken geeignet ist.

Die erfindungsgemäße Lösung kann dabei maschinentechnisch einfach und kostengünstig hergestellt werden, ist robust und gewährleistet stets ein funktionssicheres, zuverlässiges Räumen mit hoher Profilform- und Flankengenauigkeit am geräumten Werkstück, so dass das mit der erfindungsgemäßen Lösung tatsächlich geräumte Profil stets exakt dem Soll-Profil entspricht.

In der Figur 4 ist nun der Schnitt in der Reihe bei B - B gemäß Figur 3 durch das Werkstück 29 während des Kalibrierräumens mit dem erfindungsgemäß nach Figur 2 ausgebildeten Kalibrierteil 6 in der Seitenansicht dargestellt.

Die Figur 5 zeigt den Schnitt durch die unmittelbar benachbarte Reihe 7 der in Figur 4 dargestellten Reihe 7, d.h. den Schnitt bei A - A gemäß Figur 3 durch das Werkstück 29 während des Kalibrierräumens mit einem erfindungsgemäß nach Figur 2 ausgebildeten Kalibrierteil 6 in der Seitenansicht.

Durch diese in den Figuren 2 bis 5 dargestellte erfindungsgemäße Ausführungsform, welche sich auch dadurch auszeichnet, dass am Kalibrierteil 6 die in einer der Reihen 7 nebeneinander angeordneten Kalibrierräumzähne 8 derart ausgebildet sind, dass entlang des Umfangs einer Reihe 7 von Kalibrierräumzähnen 8 stets einer Führungsflanke 10 (ohne Freiwinkel / bzw. einem negativem Freiwinkel kleiner/gleich 0,1°) eine Schneidflanke 11 (mit positivem Freiwinkel) benachbart angeordnet ist.

Eine weitere grafisch hier nicht dargestellte Ausführungsform der erfindungsgemäßen Lösung ist dadurch gekennzeichnet, dass am Kalibrierteil 6 die in einer der Reihen 7 nebeneinander angeordneten Kalibrierräumzähne 8 derart ausgebildet sind, dass entlang des Umfangs einer Reihe 7 von Kalibrierräumzähnen 8 abwechselnd jedem Räumzahnfuß entweder zwei Führungsflanken 10 (ohne Freiwinkel / bzw. mit einem negativem Freiwinkel kleiner/gleich 0,1 °) oder zwei Schneidflanken 11 (mit positivem Freiwinkel) beidseitig benachbart angeordnet sind.

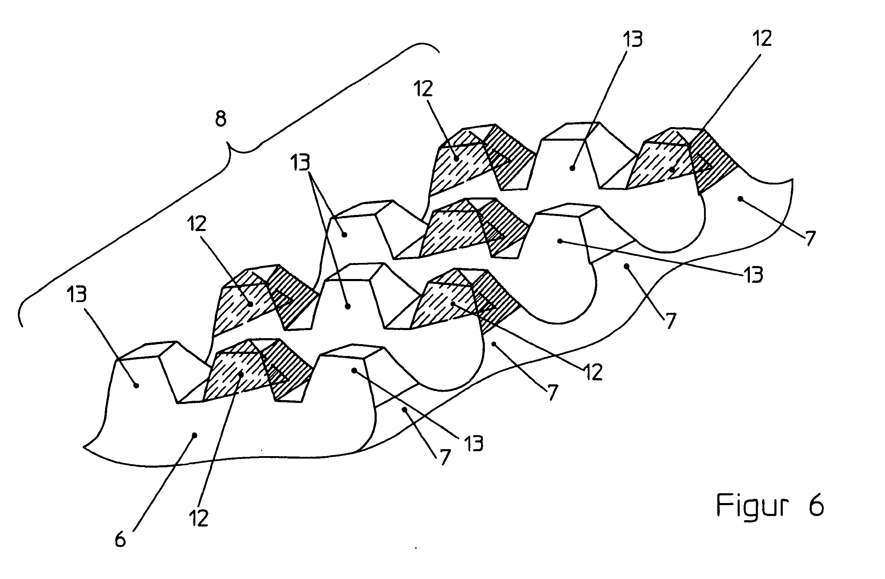

In der Figur 6 ist die Einzelheit "Z" des Kalibrierteiles 6 aus Figur 1 in einer weiteren erfindungsgemäßen Ausführungsform räumlich dargestellt.

Diese erfindungsgemäße, in der Figur 6 räumlich dargestellte Ausführungsform der erfindungsgemäßen Lösung zeichnet sich dadurch aus, dass am Kalibrierteil 6 als Räumzähne 8 einerseits Räumschneidzähne 12 (deren beide Flanken einen positiven Freiwinkel aufweisen) und andererseits Räumführungszähne 13 (deren beide Flanken keinen bzw. einem negativen Freiwinkel kleiner/gleich 0,1° aufweisen) derart angeordnet sind, dass in einer Reihe 7 stets neben einem Räumschneidzahn 12 ein Räumführungszahn 13 angeordnet ist, wobei jeder entgegen der Räumrichtung (3) nachgelagerte Räumführungszahn 13 jeweils dem in der "vorauseilenden" Reihe 7 zugeordneten Räumschneidzahn 12 (bzw. des am vorauseilend benachbarten Zahnungsteil angeordneten Räumzahnes) in seiner Lage, seiner Form und seiner Größe zugeordnet ist.

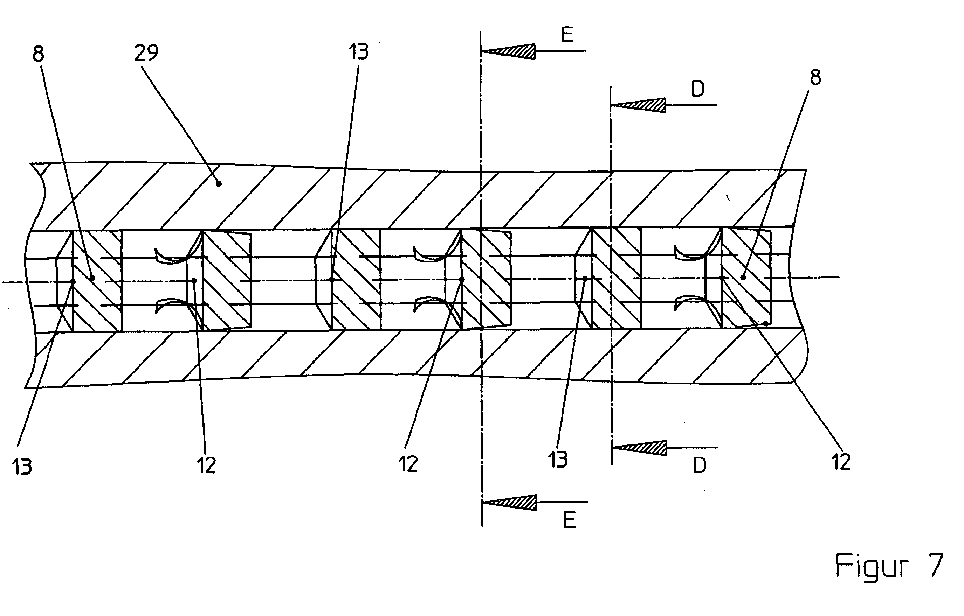

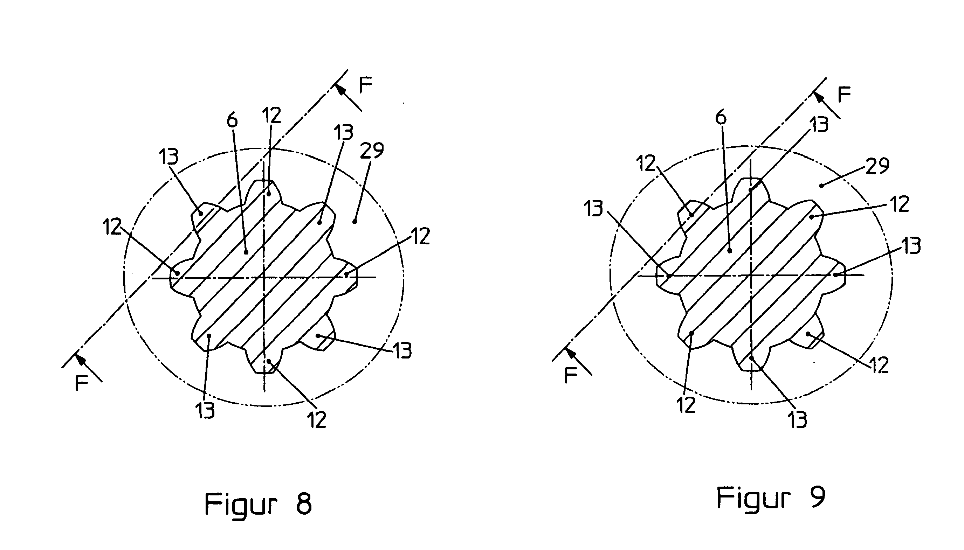

Diese erfindungsgemäße Anordnung von speziellen, erfindungsgemäßen Kalibrierräumzähnen 8 am Kalibrierteil 6 bewirkt, wie in der Figur 7, einem Teilschnitt bei F-F gemäß der Figuren 8 und 9 durch das Werkstück 29 während des Kalibrierräumens dargestellt, eine beidseitige Bearbeitung der Flanken des Werkstückes 29 mittels der Räumschneidzähne 12 bei stets exakter Führung der Räumschneidzähne 12 während des Räumens durch die zwischen diesen angeordneten Räumführungszähne 13 auch beim Drallräumen.

Diese spezielle Bauform der erfindungsgemäßen Lösung ist daher insbesondere dann geeignet, wenn beim Räumen weniger als drei Zahnreihen in Eingriff kommen.

In der Figur 8 ist das in Figur 6 dargestellte Kalibrierteil 6 nun in einem Schnitt bei D - D gemäß Figur 7 durch das Werkstück 29 während des Kalibrierräumens in der Seitenansicht dargestellt.

Die Figur 9 zeigt den Schnitt durch die in der Figur 7 dargestellte benachbarte Reihe 7, d.h. den Schnitt bei E - E gemäß Figur 7 durch das Werkstück 29 während des Kalibrierräumens mit einem nach Figur 6 ausgebildeten erfindungsgemäßen Kalibrierteil 6.

Bei allen bisher vorgestellten Ausführungsformen der erfindungsgemäßen Lösung zum Räumen von Profilen ist das mit einer erfindungsgemäßen Verzahnung versehene Kalibrierteil starr am Innenräumwerkzeug angeordnet und auch sehr gut zum Drallräumen geeignet. Alle Bauformen der erfindungsgemäßen Lösung sind zudem sehr kostengünstig herstellbar und gewährleisten eine hohe Profilform und Flankengenauigkeit am geräumten Werkstück.

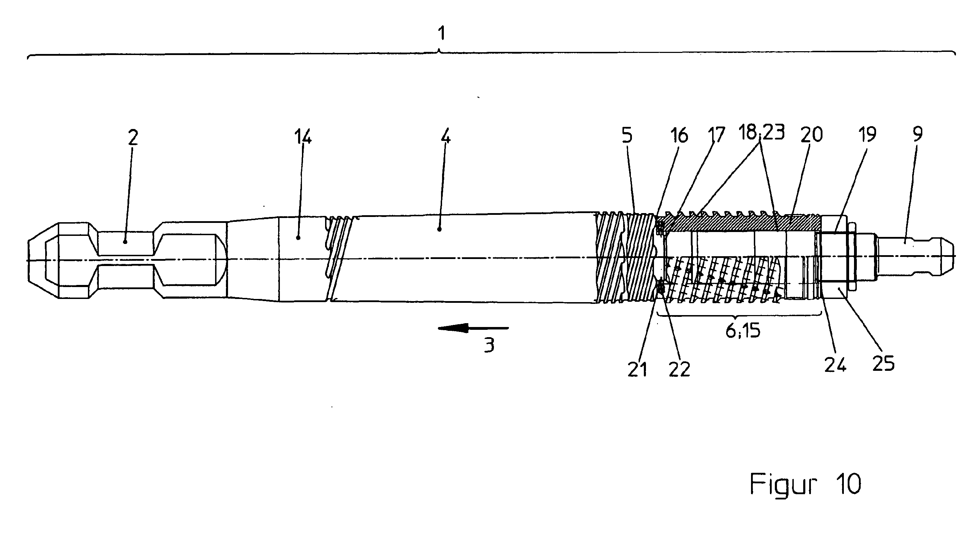

Eine spezielle, sehr vorteilhafte Ausführungsform des erfindungsgemäß ausgebildeten Kalibrierteiles 6 eines Innenräumwerkzeuges ist nun in der Figur 10 dargestellt.

Bei dieser sehr vorteilhaften Ausführungsform ist das erfindungsgemäß ausgebildete Kalibrierteil als eine gegenüber dem Zahnungsteil 4 "justierbare" Kalibrierbuchse 20 ausgebildet.

Bei dieser in der Figur 10 dargestellten Ausführungsform besteht das Innenräumwerkzeug 1 aus einem Räumwerkzeuggrundkörper 14 mit einem Schaft 2, einem dem Schaft 2 entgegen der Räumrichtung 3 benachbart angeordneten Zahnungsteil 4 und einem Endstück 9, wobei zwischen dem Zahnungsteil 4 und dem Endstück 9 ein Buchsenaufnahmebereich 15 mit einem dem Zahnungsteil 4 benachbart angeordneten Buchsenanlagesteg 16, einem Buchsenmitnahmebereich 17, einem entgegen der Räumrichtung 3 diesem benachbart angeordneten Buchsenführungsbereich 18 und einem zwischen dem Buchsenführungsbereich 18 und dem Endstück 9 befindlichen Buchsenbefestigungsbereich 19 angeordnet ist, wobei auf dem Buchsenaufnahmebereich 15 das Kalibrierteil 6 nun als Kalibrierbuchse 20 angeordnet ist.

Erfindungsgemäß ist zwischen dem Zahnungsteil 4 und dem Kalibrierteil 6 wiederum ein Entspannungsteil 5 angeordnet.

Kennzeichnend dabei ist, dass diese Kalibrierbuchse 20 mit einer dem Zahnungsteil 4 benachbart angeordneten, mit dem Buchsenmitnahmebereich 17 in Wirkverbindung tretende Mitnehmeraufnahme 21 sowie mehreren im Bereich der Mitnehmeraufnahme 21 in der Kalibrierbuchse 20 verstellbar angeordneten Stellelementen 22 und einer in der Kalibrierbuchse 20 axial angeordneten, mit dem Buchsenführungsbereich 18 in Wirkverbindung tretenden Führungsbohrung 23 versehen ist.

Kennzeichnend ist weiterhin, dass endseitig an der Kalibrierbuchse 20, der Mitnehmeraufnahme 21 gegenüberliegend ein Anlagebund 24, und diesem Anlagebund 24 der Kalibrierbuchse 20 benachbart ein mit dem Buchsenbefestigungsbereich 19 des Räumwerkzeuggrundkörpers 14 in Wirkverbindung tretendes Lagesicherungselement 25 angeordnet ist.

Diese erfindungsgemäße Anordnung ermöglicht eine Korrektur von Räumfehlern, da beispielsweise durch die Änderung der Hauptschnittkraft bzw. eine Änderung der Torsionskräfte (Abstumpfung des Werkzeuges, Änderung der Festigkeitsparameter des Werkstückes, usw.) ein anderer Verlauf der Kalibrierung erforderlich werden kann. Diesem Erfordernis kann nun mittels der erfindungsgemäßen Lösung durch eine Verdrehung der Kalibrierbuchse 20 entweder in positiver oder in negativer Drehrichtung entsprochen werden, wobei die auf das Zweiflach einwirkenden Stellelemente 22 in Verbindung mit der Wirkverbindung zwischen dem Buchsenmitnahmebereich 17 am Räumwerkzeuggrundkörper 14 und der an der Kalibrierbuchse 20 angeordneten Mitnehmeraufnahme 21 stets eine sichere und zuverlässige Kraftübertragung gewährleisten.

Vorteilhaft bei dieser speziellen mit einer Kalibrierbuchse 20 ausgestatteten Bauform ist zudem, dass im Buchsenbefestigungsbereich 19 am Räumwerkzeuggrundkörper 14 ein Außengewinde 26 angeordnet ist, auf dem entgegen der Räumrichtung 3 als Lagesicherungselement 25 nebeneinander eine Spannmutter 27 und eine Sicherungsmutter 28 angeordnet sind.

Diese erfindungsgemäße Anordnung einer Spannmutter 27 und einer Sicherungsmutter 28 ermöglicht ein einfaches und sicheres Positionieren der Kalibrierbuchse 20 am Räumwerkzeuggrundkörper 1.

### Bezugszeichenzusammenstellung

- 1: Innenräumwerkzeug
- 2: Schaft
- 3: Räumrichtung
- 4: Zahnungsteil
- 5: Entspannungsteil
- 6: Kalibrierteil
- 7: Reihe
- 8: Kalibrierräumzähne
- 9: Endstück
- 10: Führungsflanke
- 11: Schneidflanke
- 12: Räumschneidzähne
- 13: Räumführungszähne
- 14: Räumwerkzeuggrundkörper
- 15: Buchsenaufnahmebereich
- 16: Buchsenanlagesteg
- 17: Buchsenmitnahmebereich
- 18: Buchsenführungsbereich
- 19: Buchsenbefestigungsbereich
- 20: Kalibrierbuchse
- 21: Mitnehmeraufnahme
- 22: Stellelement
- 23: Führungsbohrung
- 24: Anlagebund
- 25: Lagesicherungselement
- 26: Außengewinde
- 27: Spannmutter
- 28: Sicherungsmutter
- 29: Werkstück

## Patentansprüche

1. Innenräumwerkzeug (1) zum Innenräumen von Innenverzahnungen mit Profilgrund und Profilflanken bestehend aus einem Schaft (2), einem dem Schaft (2) entgegen der Räumrichtung (3) benachbart angeordneten Zahnungsteil (4) mit mehreren in Reihen hintereinander angeordneten Räumzähnen mit einander zugeordneten Profilgrundschneiden zum Vorräumen (Schruppräumen) eines Profils, einem entgegen der Räumrichtung (3) nachfolgend angeordneten Kalibrierteil (6) mit mehreren in Reihen (7) hintereinander angeordneten Kalibrierräumzähnen (8) und einem Endstück (9), mit zwischen einzelnen Schneidsequenzen des Innenräumwerkzeuges angeordneten Entspannungsteit/en (5), wobei die Kalibrierräumzähne (8) in den benachbarten Reihen (7) am Kalibrierteil (6) derart ausgebildet sind, dass diese jeweils mit einer Führungsflanke (10) ohne Freiwinkel oder einem negativen Freiwinkel kleiner/gleich 0,1° und einer Schneidflanke (11) mit positivem Freiwinkel versehen sind-, **dadurch gekennzeichnet, dass** ein Entspannungsteil (5) zwischen dem Zahnungsteil (4) und dem Kalibrierteil (6) angeordnet ist und in den benachbarten Reihen (7) der kalibreirraumzähne (8) die jeweilige Anordnung der Führungsflanken (10) und der Schneidflanken (11) an den entgegen der Räumrichtung hintereinander angeordneten Kalibrierräumzähnen (8) abwechselnd zueinander versetzt ist, wobei jede entgegen der Räumrichtung (3) nachgelagerte Führungsflanke (10) jeweils der in der "vorauseilenden" Reihe (7) zugeordneten Schneidflanke (11) oder der Flanke des Räumzahnes in ihrer Lage, ihrer Form und ihrer Größe zugeordnet ist.

2. Innenräumwerkzeug (1) zum Innenräumen von Innenverzahnungen mit Profilgrund und Profilflanken bestehend aus einem Schaft (2), einem dem Schaft (2) entgegen der Räumrichtung (3) benachbart angeordneten Zahnungsteil (4) mit mehreren in Reihen hintereinander angeordneten Räumzähnen mit einander zugeordneten Profilgrundschneiden zum Vorräumen (Schruppräumen) eines Profils, einem entgegen der Räumrichtung (3) nachfolgend angeordneten Kalibrierteil (6) mit mehreren in Reihen (7) hintereinander angeordneten Kalibrierräumzähnen (8), einem Endstück (9) mit zwischen einzelnen Schneidsequenzen des Innenräumwerkzeuges angeordneten Entspannungsteil/en (5), wobei am Kalibrierteil (6) als Räumzähne (8) einerseits Räumschneidzähne (12), deren beide Flanken einen positiven Freiwinkel aufweisen, und andererseits Räumführungszähne (13), deren beide Flanken keinen oder einen negativen Freiwinkel kleiner/gleich 0,1° aufweisen angeordnet sind, **dadurch gekennzeichnet, dass** ein Entspannungsteil (5) zwischen dem Zahnungsteil (4) und dem Kalibrierteil (6) angeordnet ist und dass in einer Reihe (7) der Kalibrierraumzähne-(8) stets neben einem Räumschneidzahn (12) ein Räumführungszahn (13) angeordnet ist, wobei jeder entgegen der Räumrichtung (3) nachgelagerte Räumführungszahn (13) jeweils dem in der "vorauseilenden" Reihe (7) zugeordneten Räumschneidzahn (12) (oder des Räumzahnes) in seiner Lage, seiner Form und seiner Größe zugeordnet ist.

3. Innenräumwerkzeug nach Anspruch 1, **dadurch gekennzeichnet, dass** am Kalibrierteil (6) die in einer der Reihen (7) nebeneinander angeordneten Kalibrierräumzähne (8) derart ausgebildet sind, dass entlang des Umfangs einer Reihe (7) von Kalibrierräumzähnen (8) stets einer Führungsflanke (10) (ohne Freiwinkel / oder mit einem negativem Freiwinkel kleiner/gleich 0,1°) eine Schneidflanke (11) (mit positivem Freiwinkel) benachbart angeordnet ist.

4. Innenräumwerkzeug nach Anspruch 1, **dadurch gekennzeichnet, dass** am Kalibrierteil (6) die in einer der Reihen (7) nebeneinander angeordneten Kalibrierräumzähne (8) derart ausgebildet sind, dass entlang des Umfangs einer Reihe (7) von Kalibrierräumzähnen (8) abwechselnd jedem Räumzahnfuß entweder zwei Führungsflanken (10) (ohne Freiwinkel / oder mit einem negativem Freiwinkel kleiner/gleich 0.1°) oder zwei Schneidflanken (11) (mit positivem Freiwinkel) beidseitig benachbart angeordnet sind.

5. Innenräumwerkzeug nach Anspruch 1 oder 2, **dadurch gekennzeichnet, dass** das Kalibrierteil (6) als eine gegenüber dem Zahnungsteil (4) "justierbare" Kalibrierbuchse (20) ausgebildet ist.

## Claims

1. Internal broaching tool (1) for the internal broaching of internal gears with profile base and profile flanks consisting of a shaft (2), a gearing part (4) adjoining the shaft (2) opposing the broaching direction (3) with several rows of broaching teeth arranged one behind the other with facing profile base cutters for preliminary broaching (rough broaching) of a profile, a following calibration part (6) arranged opposing the broaching direction (3) with several rows (7) of calibration broaching teeth (8) arranged one behind the other and an end piece (9), with tension relief part/s (5) arranged between the individual cutting sequences of the internal broaching tool, in which the calibration broaching teeth (8) in the adjoining rows (7) on the calibration part (6) are designed in such a way that these are provided with a guide flank (10) without clearance angle or a negative clearance angle less than/equal to 0.1° and a cutting flank (11) with a positive clearance angle, **characterised by** the fact that a tension relief part (5) is arranged between the gearing part (4) and the calibration part (6) and in the adjoining rows (7) of the calibration broaching teeth (8) the respective arrangement of the guide flanks (10) and the cutting flanks (11) on the calibration broaching teeth (8) arranged behind each other opposing the broaching direction is alternately offset with each other, whereby every following guide flank (10) arranged opposite the broaching direction (3) is allocated to the cutting flank (11) in the "advance" row (7) or the flank of the broaching tooth with regard to position, shape and size.

2. Internal broaching tool (1) for the internal broaching of internal gears with profile base and profile flanks consisting of a shaft (2), a gearing part (4) adjoining the shaft (2) opposing the broaching direction (3) with several rows of broaching teeth arranged one behind the other with facing profile base cutters for preliminary broaching (rough broaching) of a profile, a following calibration part (6) arranged opposing the broaching direction (3) with several rows (7) of calibration broaching teeth (8) arranged one behind the other and an end piece (9), with tension relief part/s (5) arranged between the individual cutting sequences of the internal broaching tool, in which are arranged on the calibration part (6) as broaching teeth (8) either broaching cutter teeth (12) whose two flanks have a positive clearance angle or broaching guide teeth (13) whose two flanks have either no clearance angle or a negative clearance angle less than/equal to 0.1°, **characterised by** the fact that a tension relief part (5) is arranged between the gearing part (4) and the calibration part (6), and that in one row (7) of the calibration broaching teeth (8) a broaching guide tooth (13) is always arranged next to a broaching cutter tooth (12), whereby every following broaching guide tooth (13) is allocated to the broaching cutter tooth (12) or broaching tooth in the "advance" row (7) with regard to position, shape and size.

3. Internal broaching tool in accordance with Claim 1, **characterised by** the fact that on the calibration part (6), the calibration broaching teeth (8) arranged next to each other in one of the rows (7) are designed in such a way that along the circumference of a row (7) of calibration broaching teeth (8), a guide flank (10) (without clearance angle / or with a negative clearance angle less than/equal to 0.1°) is always arranged adjoining a cutting flank (11) (with positive clearance angle).

4. Internal broaching tool in accordance with Claim 1, **characterised by** the fact that on the calibration part (6), the calibration broaching teeth (8) arranged next to each other in one of the rows (7) are designed in such a way that along the circumference of a row (7) of calibration broaching teeth (8) every broaching tooth foot is arranged alternately with two guide flanks (10) (without clearance angle / or with a negative clearance angle less than/equal to 0.1°) or two cutting flanks (11) (with positive clearance angle) on both sides.

5. Internal broaching tool (1) in accordance with Claim 1 or 2, **characterised by** the fact that the calibration part (6) is designed as an "adjustable" calibrating bush (20) opposite the gearing part (4).

## Revendications

1. Outil de brochage intérieur (1) pour brochage d'engrenages intérieurs avec base de profilé et flancs de profilé composé d'un arbre (2), d'un élément d'engrenage (4) disposé au voisinage de l'arbre (2) dans le sens contraire de la direction de brochage (3) avec plusieurs engrenages de brochage disposés en série les uns derrière les autres avec des lames de base profilée assignées entre elles pour le brochage préalable (brochage de dégrossissage) d'un profilé, d'un élément d'étalonnage (6) placé à la suite dans le sens contraire de la direction de brochage (3) avec plusieurs engrenages de brochage d'étalonnage (8) placés en série (7) les uns derrière les autres et d'un élément final (9), avec un/des élément/s de détente (5) placé/s entre les différentes séquences de coupage de l'outil de brochage intérieur, les engrenages de brochage d'étalonnage (8) dans les séries (7) voisines sur l'élément d'étalonnage (6) étant conçus de telle façon que ceux-ci sont pourvus respectivement d'un flanc de guidage (10) sans angle libre ou bien d'un angle libre négatif inférieur/égal à 0,1° et d'un flanc de coupe (11) à angle libre positif, **caractérisé par le fait qu'**un élément de détente (5) est placé entre l'élément d'engrenage (4) et l'élément d'étalonnage (6) et que dans les séries (7) voisines des engrenages de brochage d'étalonnage (8) la disposition respective des flancs de guidage (10) et des flancs de coupe (11) sur les engrenages de brochage d'étalonnage (8) placés les uns derrière les autres dans le sens contraire de la direction de brochage est effectuée de manière alternée, chaque flanc de guidage (10) monté en aval dans le sens contraire de la direction de brochage (3) étant attribué respectivement au flanc de coupe (11) assigné dans la série (7) "en avance" ou au flanc de l'engrenage de brochage dans sa position, sa forme et sa dimension.

2. Outil de brochage intérieur (1) pour brochage d'engrenages intérieurs avec base de profilé et flancs de profilé composé d'un arbre (2), d'un élément d'engrenage (4) disposée au voisinage de l'arbre (2) dans le sens contraire de la direction de brochage (3) avec plusieurs engrenages de brochage placés en série les uns derrière les autres avec des lames de base profilée assignées en elles pour le brochage préalable (brochage de dégrossissage) d'un profilé, d'un élément d'étalonnage (6) placé à la suite dans le sens contraire de la direction de brochage (3) avec plusieurs engrenages de brochage d'étalonnage (8) placés en série (7) les uns derrière les autres et d'un élément final (9), avec un/des élément/s de détente (5) placé/s entre les différentes séquences de coupage de l'outil de brochage intérieur, avec sur l'élément d'étalonnage (6) en tant qu'engrenages de brochage (8) d'une part des engrenages coupants de brochage (12) dont les deux flancs présentent un angle libre positif et d'autre part des engrenages de guidage de brochage (13) dont les deux flancs ne présentent aucun ou présentent un angle libre négatif inférieur/égal à 0,1°, **caractérisé par le fait qu'**un élément de détente (5) est placé entre l'élément d'engrenage (4) et l'élément d'étalonnage (6) et que dans une série (7) des engrenages de brochage pour l'étalonnage (8) un engrenage de guidage de brochage (13) est toujours placé à côté d'un engrenage coupant de brochage (12), chaque engrenage de guidage de brochage (13) monté en aval dans le sens contraire de la direction de brochage (3) étant attribué respectivement à l'engrenage coupant de brochage (12) ou bien à l'engrenage de brochage placé dans la série (7) "en avance" dans sa position, sa forme et sa dimension.

3. Outil de brochage intérieur (1) selon l'exigence 1 **caractérisé par le fait que**, sur l'élément d'étalonnage (6), les engrenages de brochage d'étalonnage (8) disposés les uns à côté des autres dans l'une des séries (7) sont conçus de telle façon que, le long du périmètre d'une série (7) d'engrenages de brochage pour étalonnage (8), un flanc de coupe (11) (avec angle libre positif) est toujours ordonné au voisinage d'un flanc de guidage (10) (sans angle libre / ou avec un angle libre négatif inférieur/égal à 0,1°).

4. Outil de brochage intérieur (1) selon l'exigence 1 **caractérisé par le fait que**, sur l'élément d'étalonnage (6), les engrenages de brochage pour étalonnage (8) disposés les uns à côté des autres dans l'une des séries (7) sont conçus de telle façon que, le long du périmètre d'une série (7) d'engrenages de brochage pour étalonnage (8), soit deux flancs de guidage (10) (sans angle libre / ou avec un angle libre négatif inférieur/égal à 0,1°) soit deux flancs de coupe (11) (avec angle libre positif) sont ordonnée des deux côtés en vis-à-vis et en alternance avec chaque pied d'engrenage de brochage.

5. Outil de brochage intérieur (1) selon l'exigence 1 ou 2 **caractérisé par le fait que** l'élément d'étalonnage (6) est conçu comme une douille d'étalonnage (20) "ajustable" disposée en face de l'élément d'engrenage (4).
